# EUROPEAN PATENT APPLICATION

(11) **EP 2 429 260 A2**
(43) Date of publication of application: **14.03.2012**
(21) Application number: 11180321.9
(22) Date of filing: 07.09.2011
(51) Int. Cl.: H05B 6/12

(54) **Heating module**

(30) Priority: 08.09.2010 TW 099130252
(71) Applicant: Delta Electronics, Inc., Taoyuan Hsien 333 (TW)
(72) Inventor: Hsien, Shin-Chi, 333 Taoyuan Hsien (TW); Liu, Chia-Hsiung, 333 Taoyuan Hsien (TW); Chen, Chieh-Cheng, 333 Taoyuan Hsien (TW); Yang, Chung-Jung, 333 Taoyuan Hsien (TW); Kuo, Chih-Wei, 333 Taoyuan Hsien (TW); Hsueh, Yu-Lin, 333 Taoyuan Hsien (TW); Tsai, Po-Jen, 333 Taoyuan Hsien (TW); Chen, Man-Mei, 333 Taoyuan Hsien (TW)
(74) Representative: Becker Kurig Straus

(57) **Abstract**

A heating module (200) is disposed in an induction cooker, including a magnetic induction unit (230), a plate (220) disposed on the magnetic induction unit (230), and a wire (210) horizontally and spirally disposed on the plate (220). The adjacent windings of the wire at a first region are spaced apart from each other. The adjacent windings of the wire at a second region are spirally and tightly wound and contact each other, wherein the second region is on an outer side of the first region.

## Description

### CROSS REFERENCE TO RELATED APPILCATIONS

This Application claims priority of Taiwan Patent Application No. 099130252, filed on Sep. 8, 2010, the entirety of which is incorporated by reference herein.

### BACKGROUND OF THE INVENTION

### Field of the Invention

This application relates in general to a heating module and in particular to a heating module disposed in an induction cooker.

### Description of the Related Art

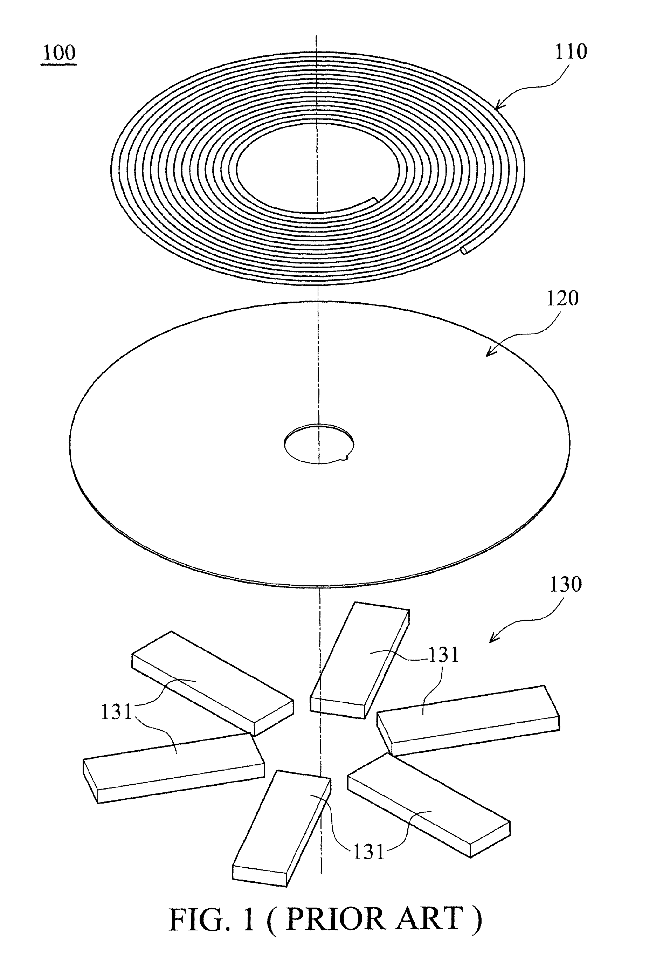

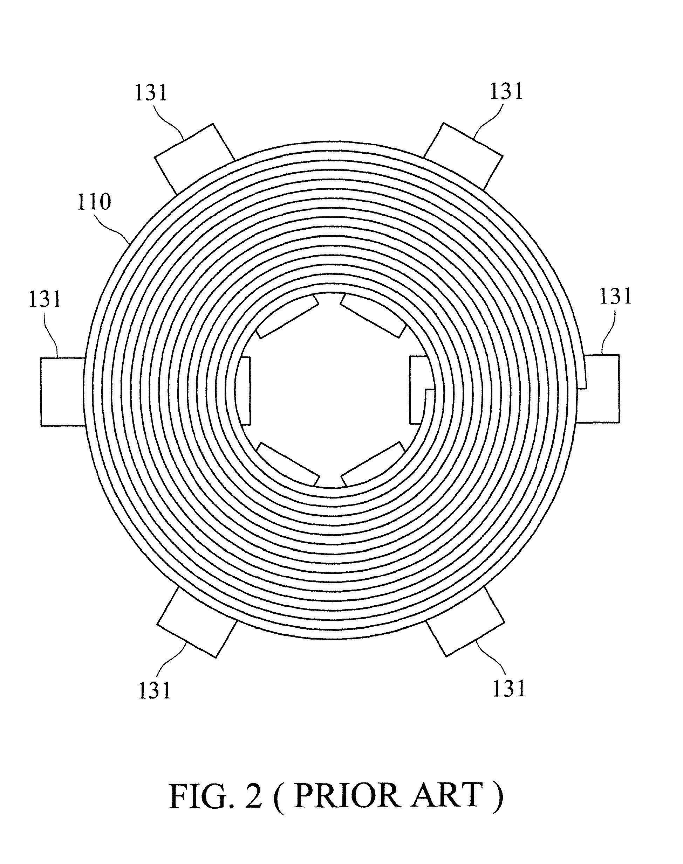

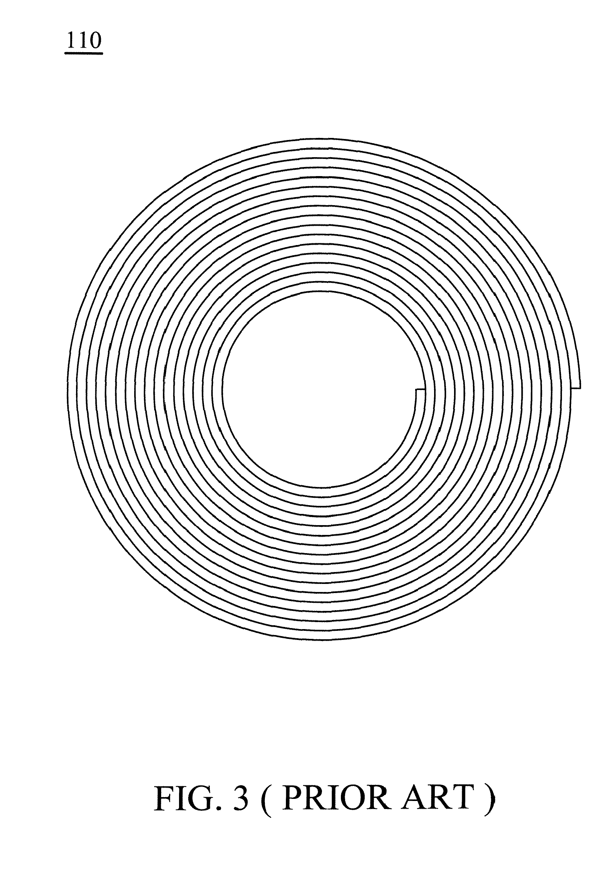

In an induction cooker, an electrical current can be applied to a coil to create a magnetic field. This magnetic field induces an Eddy current in a metal pot to heat food. Referring to FIGs. 1-3, a conventional coil module 100 of an induction cooker includes a wire 110, a plate 120, and a ferrite core unit 130. The wire 110 may be a litz wire, and the plate 120 is made of insulating material, wherein the wire 110 is spirally disposed on the plate 120. As shown in FIGs. 1 and 2, the ferrite core unit 130 includes several longitudinal magnetic cores 131 which are disposed beneath the plate 120.

When activating the coil module 100 at the same power condition, the spiral configuration of the wire 110 may cause a concentration of eddy current at the center of the pot such that heating of the pot is uneven. Thus, the coil module 100 usually requires more power for heating the pot, thereby resulting in inefficient power consumption. Additionally, the conventional induction cooker may not be suitable for large pots as the closed contact configuration of the wire 110 restricts the diameter of the heater. In addition to the disadvantages of poor heating efficiency and uneven heating, the pot adapted for the conventional induction cooker is uneasy to be selected.

### BRIEF SUMMARY OF INVENTION

An object of the present invention is to provide a heating module, wherein the heating module is disposed in an induction cooker and includes a magnetic induction unit, a plate disposed on the magnetic induction unit, and a wire horizontally and spirally disposed on the plate. In a first region, the wire is spirally wound with a gap between two adjacent windings. Preferably, the gap is ranged from 0.5 mm to 4 mm. In a second region, the wire is spirally and tightly wound into a close contact shape, wherein the second region is on an outer side of the first region.

Another object of the present invention is to provide a heating module including a magnetic induction unit, a plate coupled to the magnetic induction unit, and a wire disposed on the plate and wound with different winding densities at the same plane.

Preferably, the winding density of the wire is gradually increased from an inner side to an outer side of the heating module.

Preferably, the winding density of the wire is gradually increased from an inner side to an outer side of the heating module.

Preferably, the wire is spirally and horizontally disposed on the plate, and an average winding density of the wire in a first region is less than that in a second region, wherein the second region is on an outer side of the first region.

Preferably, wherein the heating module is disposed in an induction cooker, and the magnetic induction unit comprises a plurality of magnetic cores.

Another further object of the present invention is to provide a heating module disposed in an induction cooker, and including a magnetic induction unit having a plurality of magnetic cores, a plate disposed on the magnetic cores, and a wire disposed on the plate, wherein an average winding density of the wire in a first region is less than that in a second region.

Preferably, wherein the winding number of the wire in the first region equals to or exceeds half of a total winding number of the wire.

Preferably, wherein the winding number of the wire in the second region is less than or equal to half of a total winding number of the wire.

Preferably, wherein the winding number of the wire in the second region equals to or exceeds 3.

Preferably, wherein the magnetic induction unit comprises 5 to 8 magnetic cores, the wire is a litz wire, and the plate is made of insulating material.

Preferably, wherein the magnetic cores have a longitudinal structure and are arranged in a radial pattern.

Preferably, wherein each of the magnetic cores has a first protrusion, a second protrusion, and a recess formed between the first and second protrusions, wherein the first and second protrusions are formed at opposite ends of the magnetic core.

Preferably, each of the magnetic cores further has a first segment, a second segment, and a third segment, the second segment connects the first segment with the third segment, and the first and second protrusions are respectively formed on the first and third segments.

Preferably, wherein the magnetic induction unit is assembled with the plate by engagement or connected to the plate by an adhesive.

### BRIEF DESCRIPTION OF DRAWINGS

The invention can be more fully understood by reading the subsequent detailed description and examples with references made to the accompanying drawings, wherein:

FIG. 1 is an exploded view of a conventional coil module in an induction cooker;

FIG. 2 is a top view of a conventional coil module;

FIG. 3 is a schematic diagram of a wire shown in FIG. 2;

FIG. 4 is an exploded view of a heating module according to an embodiment of the invention;

FIG. 5 is a top view of a heating module according to an embodiment of the invention;

FIG. 6 is a schematic diagram of a wire shown in FIG. 5;

FIG. 7 is a sectional view of FIG. 5 along the line X1-X2;

FIG. 8 is a perspective view of a magnetic core shown in FIG. 4; and

FIG. 9 is an exploded view of a magnetic core according to another embodiment of the invention.

### DETAILED DESCRIPTION OF INVENTION

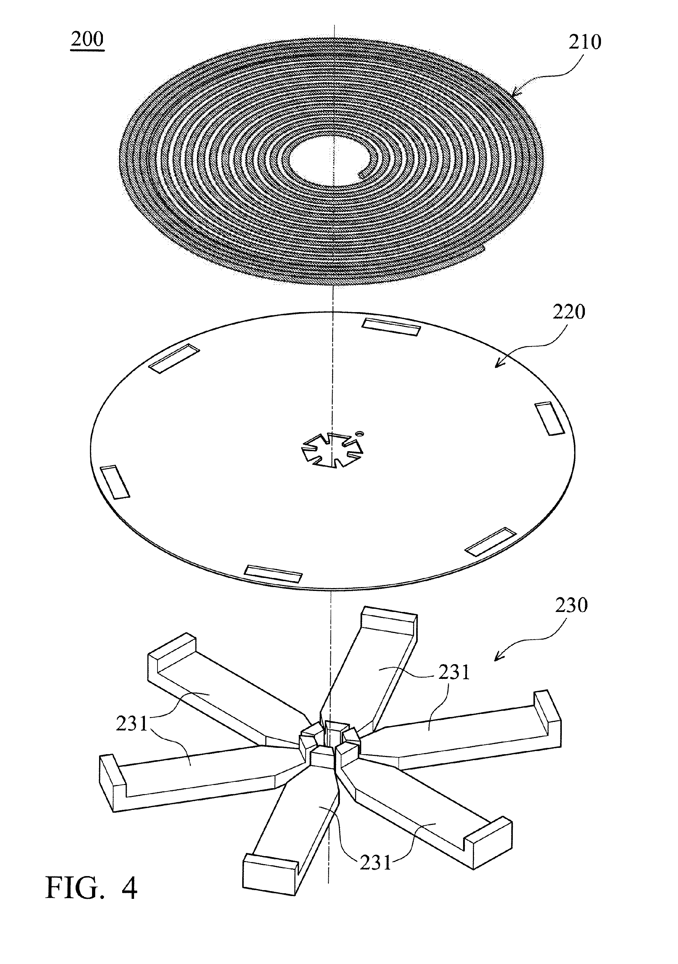

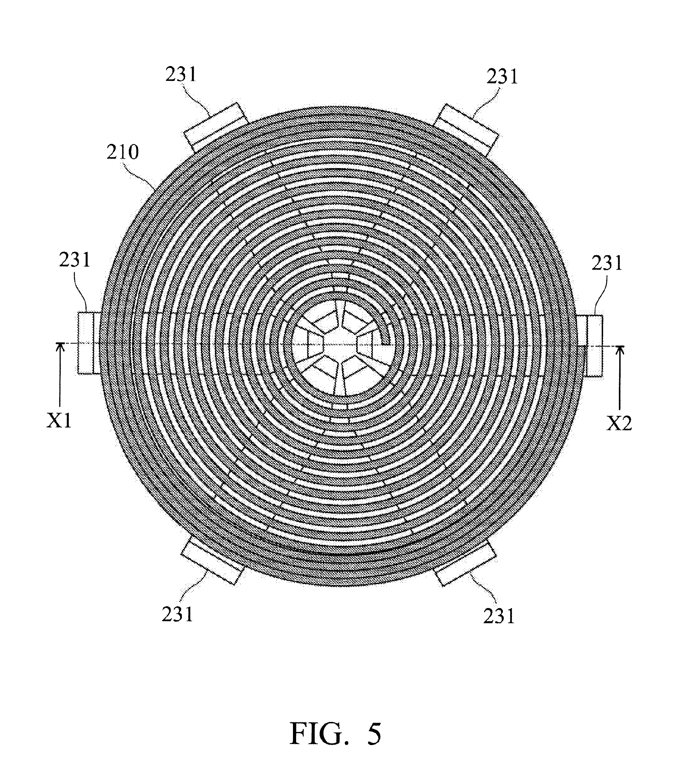

Referring to FIGs. 4-7, a heating module 200 is used in an induction cooker and includes a wire 210, a plate 220, and a magnetic induction unit 230 disposed beneath the plate 220 according to an embodiment of the present invention. The wire 210 can be a litz wire, and the plate 220 is made of insulating material, wherein the wire 210 is horizontally and spirally disposed on the plate 220. As shown in FIG. 4, the magnetic induction unit 230 includes a plurality of longitudinal magnetic cores 231 (about 5∼8 cores) arranged in a radial pattern for sustaining the wire 210 and the plate 220. In some embodiments, the magnetic induction unit 230 can be assembled with the plate 220 by engagement or fixed to the plate 220 by an adhesive.

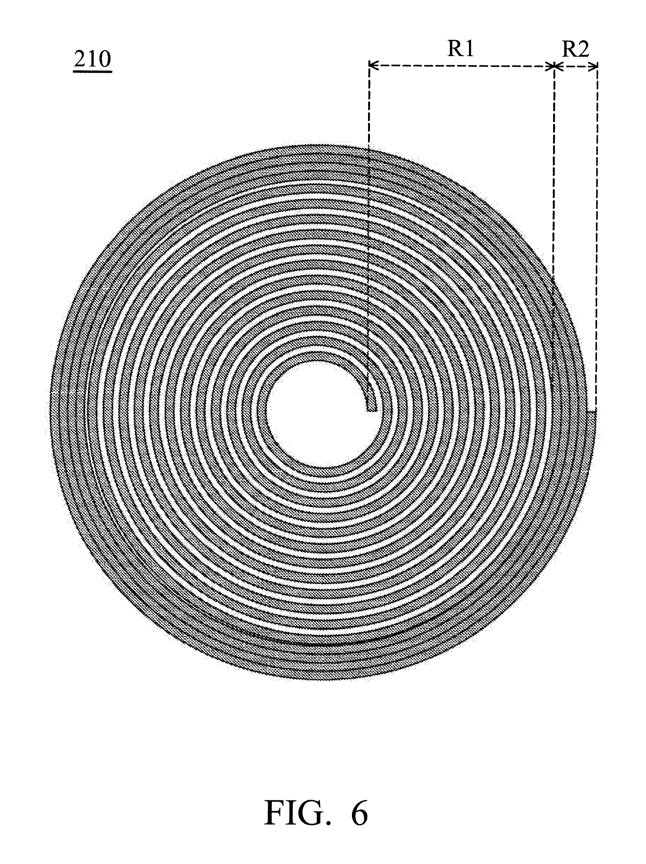

Specifically, the wire 210 in this embodiment is spirally wound from the inside toward the outside of the heating module 200 in different winding densities. As shown in FIG. 6, the flat and spirally wound wire 210 has a first region R1 and a second region R2, wherein the second region R2 is at an outer side of the first region R1. In the first region R1, the wire 210 is spirally wound with a gap between two adjacent windings. A preferable range of the gap is from 0.5mm to 4.0mm. In the second region R2, the wire 210 is tightly wound into a close contact shape without any gap between adjacent windings. Via the different winding densities of the wire 210, uneven heating of the pot can be prevented so as to improve efficiency of the heating module 200.

For example, N represents the total winding number of the wire 210, N1 represents the winding number of the wire 210 in the first region R1, and N2 represents the winding number of the wire 210 in the second region R2, wherein N=N1+N2. It is noted that the winding number N1 of the wire 210 in the first region R1 equals to or exceeds half of the total winding number N of the wire 210 (N1 ≧ N/2). On the other hand, the winding number N2 of the wire 210 in the second region R2 is less than or equal to half of the total winding number N of the wire 210 (N2 ≦ N/2).

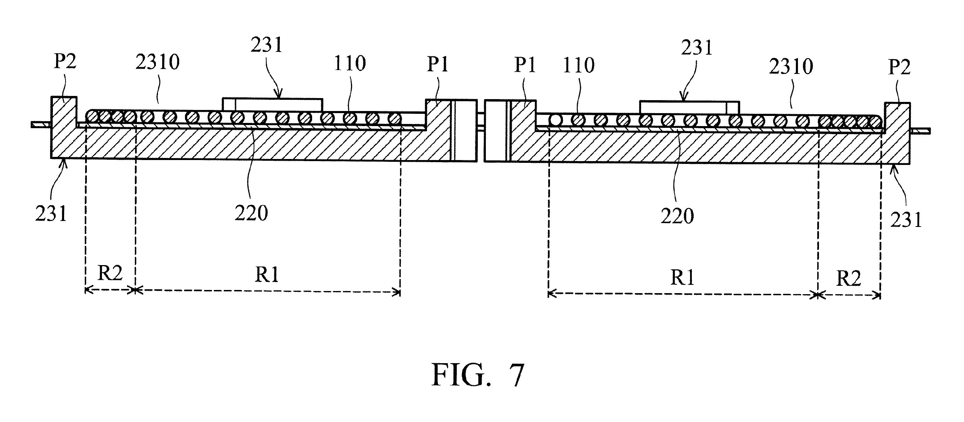

In this embodiment, the winding number N2 is equal to or exceeds 3, i.e. 3 ≦ N2 ≦ N/2, so as to eliminate uneven heating effect between the inner and outer sides of the heating module 200. Referring to FIGs. 6 and 7, the total winding number N of the wire 210 is 16 (N=16), the winding number N1 of the wire 210 in the first region R1 is 12 (N1=12), and the winding number N2 of the wire 210 in the second region R2 is 4 (N2=4). Hence, the flat and spirally wound wire 210 meets the conditions of N=N1+N2, N1 ≧/2, and 3 ≦ N2 ≦ N/2.

Additionally, the winding density of the wire 210 can be gradually increased from the inner side to the outer side of the heating module 200. In such a configuration, the average winding density of the wire 210 in the first region R1 is less than that in the second region R2, wherein the second region R2 is at the outer side of the first region R1 as shown in FIGs. 6 and 7.

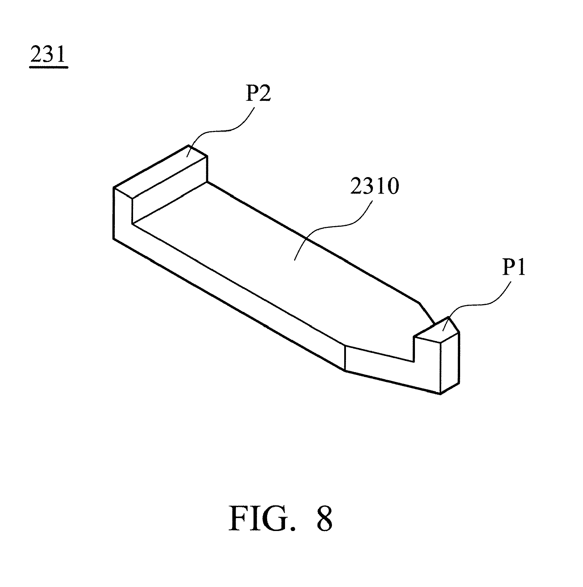

Referring to FIGs. 7 and 8, each magnetic core 231 of the magnetic induction unit 230 forms a first protrusion P1, a second protrusion P2, and a recess 2310 between the first and second protrusions P1 and P2. During assembling, the wire 210 can be received in the recess 2310, as shown in FIG. 7. The first and second protrusions P1 and P2 can enhance the closed magnetic field and Eddy Current so as to reduce power consumption and improve efficiency of the heating module 200. Moreover, FIG. 7 also shows that the flat wound wires 210 in the first and second regions R1 and R2 are wound on the same plane.

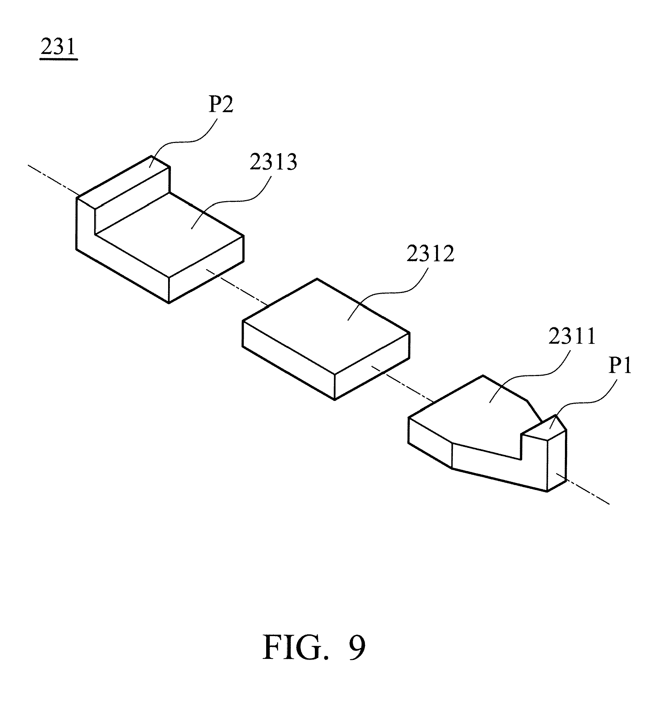

The magnetic core 231 can be formed as a single piece or constructed by several parts. FIG. 9 illustrates another embodiment of a magnetic core 231 which includes a first segment 2311, a second segment 2312, and a third segment 2313. As shown in FIG. 9, the second segment 2312 connects the first segment 2311 with the third segment 2313, wherein the first and second protrusions P1 and P2 are respectively formed on the first and third segments 2311 and 2313. During assembling, the first segment 2311, second segment 2312, and third segment 2313 can be fixed to each other by welding or adhesive for magnetic conduction.

The invention provides a heating module which can be widely applied to induction cookers. The heating module includes a flat and spirally wound wire with different winding densities to prevent uneven heating between the inner and outer sides of the heating module. Specifically, when applied with the same power, the heating module of the invention can provide a larger heating surface than the conventional induction cookers due to the different winding densities of the wire. Thus, the invention can be more suitable for large pots even when the pots are not precisely positioned at the center of the induction cooker.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation to encompass all such modifications and similar arrangements.

## Claims

1. A heating module comprising:
a magnetic induction unit;
a plate coupled to the magnetic induction unit; and
a wire disposed on the plate and wound with different winding densities at the same plane.

2. The heating module as claimed in claim 1, wherein the winding density of the wire is gradually increased from an inner side to an outer side of the heating module.

3. The heating module as claimed in claim 1, wherein the wire is spirally and horizontally disposed on the plate, and an average winding density of the wire in a first region is less than that in a second region, wherein the second region is on an outer side of the first region.

4. The heating module as claimed in claim 1, wherein the wire in a first region forms a gap between two adjacent windings of the wire, and the wire in a second region is tightly wound into a close contact shape, wherein the second region is on an outer side of the first region.

5. The heating module as claimed in claim 4, wherein the gap is ranged from 0.5 mm to 4 mm.

6. The heating module as claimed in claims 1, 2, 3, or 4, wherein the heating module is disposed in an induction cooker, and the magnetic induction unit comprises a plurality of magnetic cores.

7. A heating module disposed in an induction cooker, comprising:
a magnetic induction unit comprising a plurality of magnetic cores;
a plate disposed on the magnetic cores; and
a wire disposed on the plate, wherein an average winding density of the wire in a first region is less than that in a second region.

8. The heating module as claimed in claims 3, 4, or 7, wherein the winding number of the wire in the first region equals to or exceeds half of a total winding number of the wire.

9. The heating module as claimed in claims 3, 4, or 7, wherein the winding number of the wire in the second region is less than or equal to half of a total winding number of the wire.

10. The heating module as claimed in claims 3, 4, or 7, wherein the winding number of the wire in the second region equals to or exceeds 3.

11. The heating module as claimed in claim 7 or 10, wherein the magnetic induction unit comprises 5 to 8 magnetic cores, the wire is a litz wire, and the plate is made of insulating material.

12. The heating module as claimed in claim 7 or 10, wherein the magnetic cores have a longitudinal structure and are arranged in a radial pattern.

13. The heating module as claimed in claim 7 or 10, wherein each of the magnetic cores has a first protrusion, a second protrusion, and a recess formed between the first and second protrusions.

14. The heating module as claimed in claim 13, wherein the first and second protrusions are formed at opposite ends of the magnetic core.

15. The heating module as claimed in claim 13, wherein each of the magnetic cores further has a first segment, a second segment, and a third segment, the second segment connects the first segment with the third segment, and the first and second protrusions are respectively formed on the first and third segments.

16. The heating module as claimed in claim 1, 2, 3, 4 or 7, wherein the magnetic induction unit is assembled with the plate by engagement or connected to the plate by an adhesive.
